(19) Europäisches Patentamt
European Patent Office
Office européen des brevets

(11) **EP 1 590 193 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **03773496.9**

(22) Anmeldetag: **07.10.2003**

(51) Int Cl.:
**B60K 31/00** *(2006.01)*

(86) Internationale Anmeldenummer:
**PCT/DE2003/003317**

(87) Internationale Veröffentlichungsnummer:
**WO 2004/069577 (19.08.2004 Gazette 2004/34)**

(54) **FAHRZEUGFÜHRUNGSSYSTEM**

VEHICLE GUIDING SYSTEM

SYSTEME DE GUIDAGE DE VEHICULE

(84) Benannte Vertragsstaaten:
**DE FR GB IT**

(30) Priorität: **30.01.2003 DE 10303585**

(43) Veröffentlichungstag der Anmeldung:
**02.11.2005 Patentblatt 2005/44**

(73) Patentinhaber: **ROBERT BOSCH GMBH**
**70442 Stuttgart (DE)**

(72) Erfinder:
• **UHLER, Werner**
**76646 Bruchsal (DE)**
• **WEILKES, Michael**
**74343 Sachsenheim (DE)**
• **SCHERL, Michael**
**71679 Asperg (DE)**
• **MICHI, Harald**
**75248 Oelbronn-Duerrn (DE)**

(56) Entgegenhaltungen:
DE-A- 4 337 872    DE-A- 4 422 982
DE-A- 10 117 722    US-A- 5 680 313

EP 1 590 193 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft eine Vorrichtung zum Bereitstellen von Stellgrößen für die Führung eines Kraftfahrzeugs.

Es sind Fahrzeugführungssysteme bekannt, die den Fahrer bei der Längsführung des Fahrzeugs (Beschleunigung und Verzögerung) und/oder bei der Querführung (Spurhaltung, Lenkung) unterstützen. Die Funktionen solcher Führungssysteme reichen von einer einfachen Geschwindigkeitsregelung auf eine vom Fahrer wählbare Wunschgeschwindigkeit über eine adaptive Geschwindigkeitsregelung (ACC; Adaptive Cruise Control), bei der auch die Abstände zu vorausfahrenden Fahrzeugen berücksichtigt werden, bis hin zu einer vollständig autonomen Führung des Fahrzeugs. Weitere Beispiele für Funktionen eines solchen Fahrzeugführungssystems sind die automatische Erzeugung von Kollisionswarnungen oder die automatische Einleitung von Notbremsungen oder Ausweichmanövern zur Vermeidung oder Milderung der Auswirkungen von Kollisionen. Die Verkehrssituation wird mit Hilfe von am Fahrzeug angebrachten Sensoren erfaßt, deren Signale einer Steuereinheit als Eingangsgrößen zugeführt werden. Die Eingangsgrößen betreffen einerseits die Bewegungsgrößen des geführten Fahrzeugs selbst, also beispielsweise dessen Fahrgeschwindigkeit, Beschleunigung, Giergeschwindigkeit und dergleichen, und andererseits Informationen über das Verkehrsumfeld, insbesondere Ortungsdaten von vorausfahrenden Fahrzeugen und sonstigen Hindernissen sowie gegebenenfalls Informationen über den Fahrbahnverlauf, die Fahrbahnbeschaffenheit und dergleichen. Für die Erfassung der Ortungsdaten sind typischerweise ein oder mehrere Abstandssensoren vorgesehen, beispielsweise ein Radarsensor zur Messung der Abstände und Relativgeschwindigkeiten von Radarzielen, im Falle eines winkelauflösenden Radarsensors auch zur Messung der Azimutwinkel der Radarziele, oder Lidarsensoren oder Kamerasysteme, insbesondere Stereokamerasysteme mit elektronischer Bildverarbeitung. Anhand der von diesen Sensoren gelieferten Eingangsgrößen berechnet die Steuereinheit Stellgrößen, die über Stellelemente des Antriebssystems und gegebenenfalls auch des Bremssystems auf das Fahrzeug einwirken. Ein Beispiel für ein ACC-System dieser Art wird beschrieben in SAE-Paper Nr. 96 10 10 "Adaptive Cruise Control, System Aspects and Development Trends", Winner et al., 1996.

Die von den Sensoren an die Steuereinheit übermittelten Eingangssignale sind in der Praxis mehr oder weniger verrauscht und müssen deshalb mit Hilfe geeigneter Filter aufbereitet werden. Jede dieser Filterprozeduren wird durch einen oder mehrere Parameter beeinflußt, die insbesondere die zeitliche Auflösung des Filters bestimmen, beispielsweise Integrationszeiten, Abklingraten oder die Auswahl von Frequenzbereichen im Frequenzspektrum des Signals. Die Filter müssen jeweils so parametriert werden, daß einerseits eine ausreichende Rausch- und Störsignalunterdrückung erreicht wird, andererseits jedoch Veränderungen der Eingangsgrößen so schnell weitergegeben werden, daß eine rechtzeitige Reaktion des Führungssystems möglich ist.

Aus der DE 43 37 872 A1 ist ein Computer einer Abstandsmeßvorrichtung mit den Merkmalen der Präambel des Anspruch 1 bekannt, der den Fahrzeugzwischenabstand bestimmt, indem ein Software-Filter auf aufeinanderfolgende Werte angewendet wird, die direkt aus der Messung erhalten werden. Eine Fahrzeug-Geschwindigkeitssteuervorrichtung zur Aufrechterhaltung des Fahrzeugzwischenabstandes umfaßt eine Abstandsmeßvorrichtung zur Messung des Fahrzeugzwischenabstandes und die die Abweichung des Fahrzeugzwischenabstandes in Bezug auf den Ziel-Fahrzeugzwischenabstand bestimmt. Die Fahrzeuggeschwindigkeit wird auf Grundlage der Abweichung gemäß dem PID (proportionalen-plus-integralen-plus-differentiellen)-Steuerverfahren gesteuert und die Verstärkungen werden gemäß dem gegenwärtigen Wert des Fahrzeugzwischenabstandes variiert.

Aus der DE 44 22 982 A1 ist ein Antriebssteuersystem für ein Kraftfahrzeug zur Durchführung einer Geschwindigkeitssteuerung bekannt, bei der die Geschwindigkeit des Fahrzeugs auf eine gewünschte Reisegeschwindigkeit gesteuert wird, und einer Abstandssteuerung, bei der das Fahrzeug so gesteuert wird, daß ein Sicherheitsabstand von einem vorausfahrenden Fremdfahrzeug eingehalten wird, wobei eine Geschwindigkeit des vorausfahrenden Fremdfahrzeugs geschätzt wird, wenn ein Bereichssucher, der den Abstand zwischen dem vorausfahrenden Fremdfahrzeug überwacht, die Sicht zum vorausfahrenden Fremdfahrzeug während der Abstandssteuerung verliert, so daß eine Soll-Reisegeschwindigkeit entsprechend der geschätzten Geschwindigkeit des vorausfahrenden Fremdfahrzeugs festgelegt wird, die das Eigenfahrzeug einhalten soll.

Aus der DE 101 17 722 A1 ist bekannt, dass ein Erkennungsergebnis eines als voraus befindlichen Fahrzeug erkannten Ziels analysiert, um zu beurteilen, ob dieses Ziel richtig als Fahrzeug erfasst worden ist oder nicht. Es wird eine relative Beschleunigung auf der Grundlage einer relativen Geschwindigkeit entsprechend dem Ziel berechnet, wenn ein Analyseergebnis die Richtigkeit dieses Ziels als Fahrzeug darstellt. Die relative Beschleunigung wird auf 0 festgelegt wenn das Analyseergebnis die Unrichtigkeit des Ziels darstellt. Es wird ein Fahrzeugabstandssteuerungsbetrag auf der Grundlage der erlangten relativen Beschleunigung korrigiert. Der Abstand zwischen dem vorausbefindlichen Fahrzeug und dem gesteuerten Fahrzeug wird auf der Grundlage des korrigierten Fahrzeugabstandssteuerungsbetrags gesteuert.

Aus der US 5,680,313 ist ein System und ein Verfahren zur Detektion von Gegenständen auf einer von einem Fahrzeug befahrenen Strasse bekannt. Begrenzungspunkte der Strasse werden aus bekannten Strassendaten berechnet. Weiterhin werden eine Reihe von abgetasteten Punkten als Linien in eine Bildebene eingeblendet um eine Ansichtsbild der vorausbefindlichen Strasse zu erhalten. Die berechneten Begrenzungspunkte werden in das Bild eingeblendet um die linken und rechten Strassenbegrenzungen anzuzeigen. Jede Begrenzungslinie wird dahingehend untersucht, ob Unterbrechungen zwischen den rechten und linken Begrenzungslinien zu erkennen, wobei jeder Unterbrechung zu einem Objekt auf der Strasse zugeordnet werden kann.

Vorteile der Erfindung

Die erfindungsgemäße Vorrichtung mit den in Anspruch 1 angegebenen Merkmalen hat den Vorteil, daß eine automatische Anpassung der Filterparameter an die jeweilige Verkehrssituation ermöglicht wird.

Zu diesem Zweck weist die Vorrichtung ein Bewertungsmodul auf, das anhand der Eingangsgrößen die Verkehrssituation bewertet und dann anhand des Bewertungsergebnisses die Filterparameter verändert. Maßgebliches Kriterium ist dabei die Dringlichkeit, mit der eine Reaktion des Fahrzeugführungssystems auf die jeweilige Situation erforderlich ist. Beispielsweise wird das Bewertungsmodul in einer relativ statischen Situation, etwa wenn bei einer Autobahnfahrt ein mit im wesentlichen konstanter (relativ hoher) Geschwindigkeit vorausfahrendes Fahrzeug in einem im wesentlichen konstanten Abstand verfolgt wird, die Filterparameter auf relativ lange Zeitkonstanten einstellen, so daß Rausch- und Störsignale durch die Filtereinrichtung wirksam unterdrückt werden. Hierdurch wird ein "ruhiges" Verhalten des Fahrzeugführungssystems und damit ein hoher Fahrkomfort erreicht. Wenn dagegen plötzliche Veränderungen in der Verkehrssituation auftreten, die eine rasche Reaktion erfordern, beispielsweise ein plötzliches Bremsmanöver eines der vorausfahrenden Fahrzeuge, das plötzliche Einscheren eines Fahrzeugs von einer Nebenspur oder das plötzliche Auftauchen eines neuen, in seiner Relevanz noch nicht sicher einzuordnenden Objekts im Erfassungsbereich des Radarsensors, z. B. bei der Ausfahrt aus einer Kurve, so verändert das Bewertungsmodul die Filterparameter in Richtung kleinerer Zeitkonstanten, so daß Änderungen im Bewegungszustand der georteten Objekte rascher erfaßt werden können und somit auch die entsprechende Systemreaktion schneller eingeleitet werden kann.

Vorteilhafte Ausgestaltungen der Erfindung sind in den Unteransprüchen angegeben.

Für die Bewertung der Verkehrssituation durch das Bewertungsmodul können verschiedene Eingangsgrößen und Kombinationen derselben sowie verschiedene Kriterien und Kombinationen von Kriterien herangezogen werden. Beispielsweise kann anhand der Abstands- und Relativgeschwindigkeitsdaten der georteten Objekte die aktuelle Kollisionsgefahr bewertet werden, so daß die Filter um so schneller ansprechen, je höher die Kollisionsgefahr ist. Wahlweise können vom Bewertungsmodul auch die von der Steuereinheit ausgegebenen Stellgrößen ausgewertet werden, etwa in der Form, daß die Filterparameter auf kurze Ansprechzeiten umgeschaltet werden, wenn die von der Steuereinheit an die Stellelemente des Antriebs- oder Bremssystems ausgegebene negative Sollbeschleunigung dem Betrage nach einen bestimmten Schwellenwert überschreitet.

Die Bewertung kann auch vom Bewegungszustand des eigenen Fahrzeugs abhängig sein, insbesondere von der Absolutgeschwindigkeit desselben. Es sind Fahrzeugsführungssysteme vorgeschlagen worden, die einen erweiterten Sensorik- und Funktionsumfang aufweisen und z. B. auch über eine sogenannnte Stop-&-Go-Funktion zum automatischen Bremsen in den Stand und zum automatischen Wiederanfahren verfügen und die deshalb auch für den Einsatz im Stadtverkehr geeignet sind. In diesem Fall wird das Bewertungsmodul bei niedriger Fahrzeuggeschwindigkeit, also beispielsweise im Stadtverkehr, kürzere Ansprechzeiten der Filter vorgeben, um der größeren Dynamik der Verkehrssituation Rechnung zu tragen.

Weiterhin kann das Bewertungsmodul auch so ausgelegt sein, daß es auf Einzelereignisse reagiert, z. B. auf das plötzliche Auftreten neuer Objekte, oder auf die Häufigkeit solcher Ereignisse. Wenn beispielsweise während einer Autobahnfahrt bei hoher Verkehrsdichte häufig Fahrzeuge von Nebenspuren einscheren, kann das System "vorbeugend" mit einer Verkürzung der Filterzeitkonstanten reagieren. Auch wenn beispielsweise anhand der Giergeschwindigkeit oder Gierbeschleunigung des eigenen Fahrzeugs oder auch anhand des Lenkradeinschlags festgestellt wird, daß das Fahrzeug eine Kurve durchfährt, ist es zweckmäßig, die Filterzeitkonstanten zu verkürzen, weil dann beim Verlassen der Kurve mit dem plötzlichen Auftreten neuer Objekte zu rechnen ist. Einige bekannte ACC-Systeme sind auch so ausgelegt, daß bei Kurvenfahrten automatisch die Ortungstiefe des Radars reduziert wird. In diesem Fall ist es zweckmäßig, parallel zur Verkürzung der Ortungstiefe auch die Filterzeitkonstanten zu verkürzen.

Weiterhin kann das Bewertungsmodul auch auf interne Einstellungen des Fahrzeugführungssytems reagieren. Zum Beispiel hat der Fahrer häufig die Möglichkeit, die Zeitlücke, d. h., den zeitlichen Abstand, in dem ein vorausfahrendes Fahrzeug verfolgt wird, innerhalb gewisser Grenzen zu variieren. Auch hier ist es zweckmäßig, bei kleinerer Zeitlücke und entsprechend kleinerem Sicherheitsabstand die Filterparameter so zu verändern, daß schneller auf die Manöver des vorausfahrenden Fahrzeugs reagiert werden kann.

In der erfindungsgemäßen Ausführungsform bildet das Bewertungsmodul aus einem Satz von mehreren Eingangsgrößen eine einzige Bewertungsgröße, die die Verkehrssituation kennzeichnet und als Grundlage für die Bestimmung der Filterparameter und ggf. auch anderer Parameter des Fahrzeugführungssystems dient. Mathematisch handelt es sich bei der einzigen Bewertungsgröße um eine skalare Funktion auf dem durch die mehreren Eingangsgrößen definierten Vektorraum. Die Abhängigkeit der Bewertungsgröße von den Eingangsgrößen kann dann durch ein mindestens zweidimensionales Kennfeld gegeben sein, das in digitaler Form in der Steuereinheit gespeichert worden ist. Die Zahl der Dimensionen des Kennfeldes entspricht der Anzahl der zu dem betreffenden Satz gehörenden Eingangsgrößen. Diese Eingangsgrößen können unmittelbar zur Adressierung des Kennfeldspeichers benutzt werden, so daß die Bewertungsgröße in kürzester Zeit bestimmt werden kann. Da alle oder zumindest mehrere Parameter von derselben Bewertungsgröße abhängig sind, bleibt der Speicherplatzbedarf für die Kennfeldspeicherung in vertretbaren Grenzen.

Zeichnung

Ein Ausführungsbeispiel der Erfindung ist in den Zeichnungen dargestellt und in der nachfolgenden Beschreibung näher erläutert.

Es zeigen:

Figur 1     ein Blockdiagramm einer Vorrichtung zum Bereitstellen von Stellgrößen für die Fahrzeugführung; und

Figur 2     ein Beispiel für eine durch ein zweidimensionales Kennfeld definierte Bewertungsgröße.

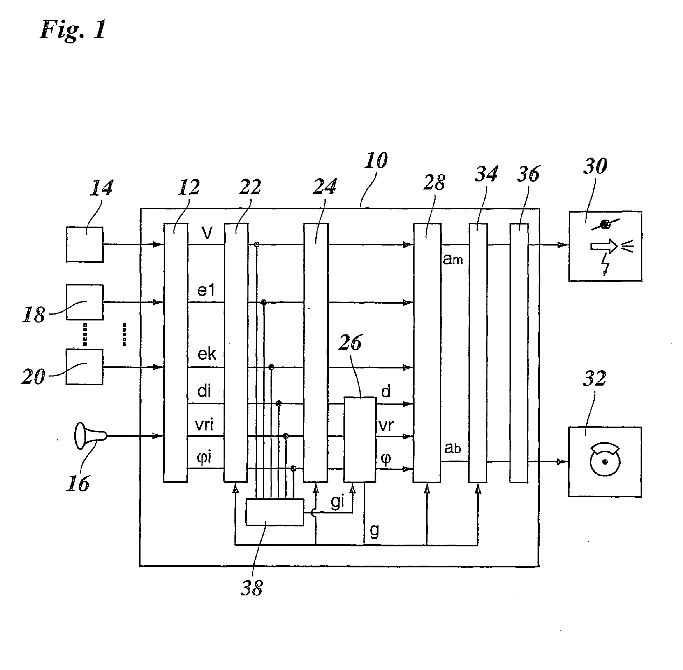

In Figur 1 ist eine Steuereinheit 10 gezeigt, die in einem Kraftfahrzeug installiert ist und dazu dient, Stellgrößen für die Fahrzeugführung bereitzustellen. Die Steuereinheit 10 weist eine Eingangsschaltung 12 auf, die Eingangsgrößen von verschiedenen Sensoren des Fahrzeugs aufnimmt, insbesondere von einem Geschwindigkeitssensor 14, der die Eigengeschwindigkeit V des Fahrzeugs mißt, und von einem Ortungsgerät 16, beispielsweise einem Radarsensor, der Ortungsdaten von vorausfahrenden Fahrzeugen und anderen möglichen Hindernissen bereitstellt. Weitere Sensoren 18, 20, die weitere Eingangsgrößen e1 - ek liefern, sind in Figur 1 lediglich summarisch dargestellt. Wahlweise können die Funktionen der Sensoren 14, 18, 20 auch von anderen Systemkomponenten des Fahrzeugs übernommen werden, die in der Lage sind, Eingangsgrößen bereitzustellen. So können beispielsweise die Eigengeschwindigkeit V, die Gierbeschleunigung des Fahrzeugs oder eine Eingangsgröße, die den Reibungskoeffizienten $\mu$ der Fahrbahn angibt, auch von einem elektronischen Stabilitätssystem (EPS) des Fahrzeugs bereitgestellt werden.

Aus den Signalen des Ortungsgerätes 16 bildet die Eingangsschaltung 12 im gezeigten Beispiel für jedes geortete Objekt i einen Satz von drei Eingangsgrößen, nämlich den Objektabstand di, die Relativgeschwindigkeit vri des Objekts und den Azimutwinkel $\varphi$i des Objekts.

Der Eingangsschaltung 12 ist eine Filterschaltung 22 nachgeordnet, in der jede Eingangsgröße mit Hilfe geeigneter Filter aufbereitet wird. Die Funktion jedes Filters in der Filterschaltung 22 ist von einem oder mehreren Filterparametern abhängig. Beispielsweise ist es denkbar, daß eine Eingangsgröße in der Filterschaltung 22 über ein bestimmtes Integrationszeitintervall gemittelt wird, um Rausch- und Störsignale zu unterdrücken. Die Länge des Integrationszeitintervalls wäre dann ein solcher Filterparameter. Ebenso ist denkbar, daß aus einer Eingangsgröße ein gleitender Mittelwert gebildet wird, indem aus den in mehreren vorausgegangenen Meßzyklen gemessenen Werten dieser Eingangsgröße eine gewichtete Summe gebildet wird, wobei die Gewichtungsfaktoren exponentiell mit einer bestimmten Zeitkonstanten abklingen. Auch diese Zeitkonstante wäre dann ein Beispiel für einen Filterparameter.

Die gefilterten Eingangsgrößen werden im gezeigten Beispiel einer Prädiktionseinheit 24 zugeführt, die anhand der Eingangsgrößen und der zeitlichen Ableitungen derselben die künftige zeitliche Entwicklung der Eingangsgrößen vorhersagt, und bestimmt, welchen Wert die betreffende Eingangsgröße zu einem bestimmten Zeitpunkt in der Zukunft, also nach Ablauf eines bestimmten Vorhersagezeitraums haben wird. Diese Vorhersagezeiträume können für die einzelnen Eingangsgrößen unterschiedlich lang sein und werden in Abhängigkeit von der Dynamik der Situation und unter Berücksichtigung der Reaktionszeit des Fahrzeugführungssystems bestimmt.

Die für jedes einzelne Objekt i aufgenommenen, gefilterten und prädizierten Eingangsgrößen di, vri und $\varphi$i werden einem Auswahlmodul 26 zugeführt, das unter den mehreren Objekten ein einziges Objekt als Zielobjekt auswählt. In der Regel wird das ausgewählte Zielobjekt das auf der eigenen Fahrspur unmittelbar vorausfahrende Fahrzeug sein. Bei der Zielobjektauswahl wird zunächst für jedes einzelne Objekt anhand des Azimutwinkels und des Abstands eine Wahrscheinlichkeit dafür berechnet, daß es sich um ein Objekt auf der eigenen Fahrspur handelt. Wenn diese Wahrscheinlichkeit oberhalb eines bestimmten Schwellenwertes liegt, wird das Objekt der eigenen Fahrspur zugeordnet. Wenn mehrere Objekte der eigenen Fahrspur zugeordnet wurden, wird im Normalfall das Objekt mit dem kleinsten Objektabstand di als Zielobjekt ausgewählt.

Die Ortungsdaten d, vr und $\varphi$ des ausgewählten Zielobjektes werden zusammen mit den übrigen Eingangsgrößen einem Regler 28 zugeführt, der aus diesen Eingangsgrößen mit Hilfe bekannter Regelalgorithmen eine Stellgröße am für Stellelemente 30 des Antriebssystems des Fahrzeugs oder eine Stellgröße $a_b$ für Stellelemente 32 des Bremssystems des Fahrzeugs berechnet.

Im gezeigten Beispiel ist dem Regler 28 eine Begrenzungseinheit 34 nachgeordnet, die die Stellgrößen am und $a_b$ und/oder deren Änderungsraten so begrenzt, daß abrupte Beschleunigungs- oder Bremsvorgänge vermieden werden und somit ein hoher Fahrkomfort erreicht wird. Die in dieser Weise begrenzten Stellgrößen werden dann über eine Ausgangsschaltung 36 an die Stellelemente 30, 32 ausgegeben. Die Funktionen der Filtereinheit 22, der Prädiktionseinheit 24, des Auswahlmoduls 26, des Reglers 28 und der Begrenzungseinheit 34, die in Figur 1 aus Gründen der Übersichtlichkeit als getrennte Blöcke dargestellt sind, können in der Praxis von einem oder mehreren Mikroprozessoren ausgeführt werden.

Die gefilterten Eingangsgrößen V, e1 - ek, di, vri, φi sowie gegebenenfalls daraus abgeleitete Größen, z. B. zeitliche Ableitungen, werden einem Bewertungsmodul 38 zugeführt, das aus diesen Größen für jedes georte Objekt eine einzige Bewertungsgröße gi bildet, die ein Maß dafür darstellt, wie kritisch die jeweilige Verkehrssituation bezüglich des betreffenden Objektes ist. Die objektspezifischen Bewertungsgrößen gi werden dem Auswahlmodul 26 zugeführt und dienen dort als Kriterium für die Zielobjektauswahl: Als Zielobjekt wird dasjenige Objekt ausgewählt, für das die Bewertungsgröße gi maximal ist. Diese maximale Bewertungsgröße g wird dann vom Auswahlmodul 26 an die Filtereinheit 22, die Prädiktionseinheit 24, den Regler 28 und die Begrenzungseinheit 34 weitergeleitet und bestimmt dort die Wahl der Filterparameter, der Vorhersagezeiträume, sowie weitere Parameter der im Regler 28 ausgeführten Regelalgorithmen und der Begrenzungsfunktion der Begrenzungseinheit 34. Auf diese Weise wird eine Optimierung dieser Parameter im Hinblick auf die jeweilige Verkehrssituation erreicht.

Wenn ein hoher Wert der maximalen Bewertungsgröße g auf eine kritische Situation hindeutet, so werden generell die Filterparameter in der Filtereinheit 22 und die Parameter im Regler 28 im Sinne einer kürzeren Ansprechzeit verändert, und die Vorhersagezeiträume in der Prädiktionseinheit 24 können verkürzt werden. Die Begrenzungsfunktionen in der Begrenzungseinheit 34 können so verändert werden, daß in kritischen Situationen höhere Beschleunigungen oder Verzögerungen sowie raschere Änderungen der Beschleunigungs- und Verzögerungswerte zugelassen werden.

Kernstück des Bewertungsmoduls 38 ist ein mehrdimensionales Kennfeld, beispielsweise in der Form eines digitalen Kennfeldspeichers, der von dem Mikroprozessor oder einem der Mikroprozessoren mit den digitalen Daten adressiert wird, die die Eingangsgrößen repräsentieren. Die Anzahl der Dimensionen des Kennfelds entspricht der Anzahl der berücksichtigten Eingangsgrößen, gegebenenfalls einschließlich der daraus abgeleiteten Größen. Für die Objektabstände di der verschiedenen Objekte ist jedoch nur eine Dimension vorgesehen, und entsprechend auch für die Relativgeschwindigkeiten und die Azimutwinkel der Objekte. Die Bewertungsgrößen gi werden nacheinander gebildet, indem der Kennfeldspeicher jeweils mit den Daten für das betreffende Objekt adressiert wird.

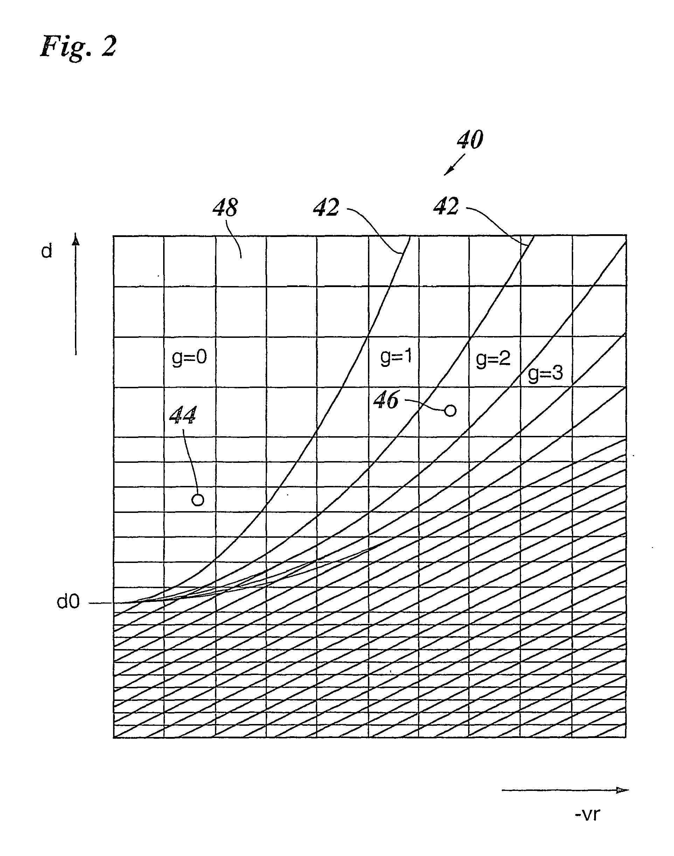

Figur 2 zeigt als vereinfachtes Beispiel einen zweidimensionalen Ausschnitt eines Kennfelds 40 mit den Dimensionen d (Objektabstand) und vr (Relativgeschwindigkeit des Objekts). Die in dem Kennfeld eingezeichneten Kurven 42 stellen "Iso-Linien", dar, für welche die Bewertungsgröße g (der Objekt-Index i ist hier fortgelassen) jeweils einen konstanten Wert hat. Die Iso-Linien 42 unterteilen somit das Kennfeld in Zonen mit unterschiedlichen Werten von g (g = 1, g = 2, ....)

Im gezeigten Beispiel haben die Iso-Linien 42 jeweils einen parabelförmigen Abschnitt entsprechend der Funktion

$$d = d_0 + vr^2/(2*g) \tag{1}$$

Dahinter verbirgt sich die folgende physikalische Interpretation: Es wird angenommen, daß sich das eigene Fahrzeug einem im Abstand d vorausfahrenden Fahrzeug mit der Relativgeschwindigkeit vr annähert (vr ist negativ). Die Bewertungsgröße g repräsentiert dann die konstante Verzögerung (negative Beschleunigung) des Fahrzeugs, die notwendig wäre, damit sich das eigene Fahrzeug dem Objekt auf eine bestimmte kritische Distanz $d_0$ nähert und dabei auf die Absolutgeschwindigkeit des Objekts abgebremst wird, so daß dann vr = 0 gilt. Die Absolutgeschwindigkeit des Objekts wird dabei als konstant angenommen.

Die obige Interpretation ist natürlich nur sinnvoll, wenn der tatsächliche Objektabstand d größer ist als $d_0$. Im Grenzfall d = $d_0$ müßte die Fahrzeugverzögerung und damit die Bewertungsgröße g unendlich hohe Werte annehmen, was physikalisch nicht möglich ist. Für kleine Objektabstände wird deshalb anstelle der obigen Gleichung (1) die folgende Gleichung (2) als Bestimmungsgleichung für die Iso-Linien 42 benutzt:

$$d = d_0 - T*vr - g*T^2/2 \tag{2}$$

Die physikalische Interpretation dieser Gleichung (2) besteht darin, daß die Bewertungsgröße g der konstanten Fahrzeugverzögerung entspricht, die notwendig ist, damit innerhalb einer bestimmten Zeitspanne T die kritische Distanz d0 erreicht wird. Diese Definition ist auch unter der Bedingung d < $d_0$ anwendbar. Die Gleichung (2) ist die Gleichung einer Geraden und entspricht somit einem geraden Abschnitt der betreffenden Iso-Linie 42. Für jeden Wert von g werden der parabelförmige Abschnitt und der gerade Abschnitt stetig aneinandergefügt, so daß man insgesamt ein stetiges Kennfeld erhält, das sowohl in d als auch in vr monoton fallend ist.

Weitere, in Figur 2 nicht gezeigte Dimensionen des Kennfelds betreffen die Eigengeschwindigkeit V des Fahrzeugs sowie die vom Fahrer gewählte Soll-Zeitlücke $\tau = d/vr$, mit der ein vorausfahrendes Fahrzeug verfolgt werden soll. Für jede Kombination aus Werten der Größen V und $\tau$ erhält man ein weiteres, zu Figur 2 analoges zweidimensionales Kennfeld, das sich von dem Kennfeld nach Figur 2 beispielsweise in der Wahl der kritischen Distanz $d_0$ und in der Wahl des Zeitintervalls T unterscheiden kann.

In Figur 2 sind als Beispiel zwei Objekte 44, 46 eingezeichnet, die jeweils durch ein entsprechendes Wertepaar (vr, d) repräsentiert werden. Beide Objekte 44, 46 sollen sich auf der eigenen Fahrspur befinden. Das Objekt 44 ist das unmittelbar vorausfahrende Fahrzeug, während das Objekt 46 das übernächste Fahrzeug ist und somit einen größeren Abstand d hat. Während normalerweise das unmittelbar vorausfahrende Fahrzeug, also das Objekt 44 als Zielobjekt ausgewählt würde, hat das hier beschriebene Verfahren zur Objektauswahl die Folge, daß in der in Figur 2 gezeigten Situation das Objekt 46, also das übernächste Fahrzeug, als Zielobjekt ausgewählt wird, weil für dieses Objekt 46 die Bewertungsgröße g größer ist. In der Praxis entspräche dies der Situation, daß das übernächste Fahrzeug (Objekt 46) abrupt gebremst hat, so daß seine Relativgeschwindigkeit dem Betrage nach sehr groß ist. Das unmittelbar vorausfahrende Fahrzeug (Objekt 44) hat auf diesen Bremsvorgang noch nicht reagiert und hat deshalb noch eine Relativgeschwindigkeit in der Nähe von 0. Durch das hier beschriebene Verfahren würde mit der Auswahl des Objekts 46 als Zielobjekt vorausschauend dem Bremsvorgang dieses Fahrzeugs Rechnung getragen, und die Geschwindigkeit des eigenen Fahrzeugs würde bereits verringert, bevor das unmittelbar vorausfahrende Fahrzeug auf den Bremsvorgang reagiert hat. Dieses Systemverhalten trägt in der Praxis nicht nur zu einer erhöhten Fahrsicherheit, sondern auch zu einer erheblichen Verstetigung des Verkehrsflusses bei hoher Verkehrsdichte bei.

In Figur 2 ist das Kennfeld 40 in quadratische oder rechteckige Zellen 48 unterteilt. Jede dieser Zellen 48 repräsentiert eine Speicherzelle des digitalen Kennfeldspeichers. Die Zellen 48 haben in unterschiedlichen Bereichen des Kennfelds 40 unterschiedliche Größen und sie sind dort am kleinsten, wo sich die Bewertungsgröße g am stärksten ändert, d. h., wo die Iso-Linien 42 am dichtesten liegen. Durch die variable Größe der Zellen 48 wird einerseits eine hinreichend hohe Auflösung des Kennfelds und andererseits, insbesondere bei hochdimensionalen Kennfeldern, eine erhebliche Verringerung des Speicherplatzbedarfes erreicht.

**Patentansprüche**

1. Vorrichtung zum Bereitstellen von Stellgrößen für die Führung eines Kraftfahrzeugs, mit einer Steuereinheit (10), die von Sensoren (14,16, 18,20) Eingangsgrößen aufnimmt, die die Verkehrssituation repräsentieren und auch Ortungsdaten (di, vri, pi) von georteten Objekten umfassen, und die aus diesen Eingangsgrößen die Stellgrößen berechnet und an Stellelemente (30,32) zur Führung des Fahrzeugs ausgibt, und mit einer zur Filterung der Ortungsdaten dienenden Filterschaltung (22), deren Zeitverhalten durch mindestens einen Filterparameter bestimmt ist, wobei ein Bewertungsmodul (38) zur situationsabhängigen Veränderung des oder der Filterparameter vorgesehen ist, und das Bewertungsmodul (38) aus einem Satz von mehreren Eingangsgrößen eine einzige Bewertungsgröße (g) bildet und mehrere Filterparameter in Abhängigkeit von dieser Bewertungsgröße variiert, **dadurch gekennzeichnet, dass** die Bewertungsgröße (g) ein Maß dafür darstellt, wie kritisch die Verkehrssituation bezüglich des betreffenden Objekts ist, und dass ein Auswahlmodul (26) vorgesehen ist, das anhand der Bewertungsgröße (g) eines von mehreren georteten Objekten als zu verfolgendes Zielobjekt auswählt.

2. Vorrichtung nach Anspruch 1, **dadurch gekennzeichnet, daß** das Bewertungsmodul die Filterparameter im Sinne kleinerer Zeitkonstanten verändert, wenn sich aus den Ortungsdaten ergibt, daß die Unterschreitung eines Sicherheitsabstands zu einem der georteten Objekte droht.

3. Vorrichtung nach Anspruch 1 oder 2, **dadurch gekennzeichnet, daß** das Bewertungsmodul (38) die Filterparameter im Sinne kleinerer Zeitkonstanten verändert, wenn ein neues Objekt geortet wird.

4. Vorrichtung nach einem der vorstehenden Ansprüche, **dadurch gekennzeichnet, daß** das Bewertungsmodul (38) die Filterparameter im Sinne kleinerer Zeitkonstanten verändert, wenn das eigene Fahrzeug eine Kurve durchfährt.

5. Vorrichtung nach einem der vorstehenden Ansprüche, **dadurch gekennzeichnet, daß** das Bewertungsmodul (38) die Filterparameter in Abhängigkeit von der Ortungstiefe eines Sensors (16) variiert, mit dem die Objekte geortet werden.

6. Vorrichtung nach einem der vorstehenden Ansprüche, **dadurch gekennzeichnet, daß** das Bewertungsmodul (38) die Filterparameter in Abhängigkeit vom gemessenen Abstand (di) eines oder mehrerer georteter Objekte variiert.

7.  Vorrichtung nach einem der vorstehenden Ansprüche, **dadurch gekennzeichnet, daß** das Bewertungsmodul (38) die Filterparameter in Abhängigkeit von der Geschwindigkeit (V) des eigenen Fahrzeugs variiert.

8.  Vorrichtung nach einem der vorstehenden Ansprüche, **dadurch gekennzeichnet, daß** das Bewertungsmodul (38) die Filterparameter in Abhängigkeit von der gemessenen Relativgeschwindigkeit (vri) eines oder mehrerer georteter Objekte variiert.

9.  Vorrichtung nach einem der vorstehenden Ansprüche, **dadurch gekennzeichnet, daß** das Bewertungsmodul (38) die Filterparameter in Abhängigkeit von der für das Fahrzeugführungssystem eingestellten Zeitlücke (T) variiert, mit der ein vorausfahrendes Fahrzeug verfolgt wird.

10. Vorrichtung nach Anspruch 8, **dadurch gekennzeichnet, daß** die Abhängigkeit der Bewertungsgröße (g) von den Eingangsgrößen in der Form eines Kennfelds (40) gespeichert ist.


**Claims**

1.  Apparatus for providing controlled variables for guiding a motor vehicle, having a control unit (10) which accepts, from sensors (14, 16, 18, 20), input variables which represent the traffic situation and also position-finding data (di, vri, pi) for located objects and which uses these input variables to calculate the controlled variables and to output them to actuating elements (30, 32) for guiding the vehicle, and having a filter circuit (22) which is used to filter the position-finding data and the time response of which is determined by at least one filter parameter, wherein an assessment module (38) is provided for the purpose of altering the filter parameter(s) on the basis of situation, and the assessment module (38) forms a single assessment variable (g) from a set comprising a plurality of input variables and varies a plurality of filter parameters on the basis of said assessment variable, **characterized in that** the assessment variable (g) is a measure of how critical the traffic situation is for the object in question, and **in that** a selection module (26) is provided which uses the assessment variable (g) to select one of a plurality of located objects as a destination object to be tracked.

2.  Apparatus according to Claim 1, **characterized in that** the assessment module alters the filter parameters in terms of relatively small time constants if the position-finding data reveal that there is the threat of dropping below a safe distance from one of the located objects.

3.  Apparatus according to Claim 1 or 2, **characterized in that** the assessment module (38) alters the filter parameters in terms of relatively small time constants when a new object is located.

4.  Apparatus according to one of the preceding claims, **characterized in that** the assessment module (38) alters the filter parameters in terms of relatively small time constants when its own vehicle takes a bend.

5.  Apparatus according to one of the preceding claims, **characterized in that** the assessment module (38) varies the filter parameters on the basis of the position-finding depth of a sensor (16) which is used to locate the objects.

6.  Apparatus according to one of the preceding claims, **characterized in that** the assessment module (38) varies the filter parameters on the basis of the measured distance (di) for one or more located objects.

7.  Apparatus according to one of the preceding claims, **characterized in that** the assessment module (38) varies the filter parameters on the basis of the speed (V) of its own vehicle.

8.  Apparatus according to one of the preceding claims, **characterized in that** the assessment module (38) varies the filter parameters on the basis of the measured relative speed (vri) of one or more located objects.

9.  Apparatus according to one of the preceding claims, **characterized in that** the assessment module (38) varies the filter parameters on the basis of the time interval (T) used to track a vehicle in front, as set for the vehicle guidance system.

10. Apparatus according to Claim 8, **characterized in that** the dependency of the assessment variable (g) on the input variables is stored in the form of a family of characteristic curves (40).

**Revendications**

1.  Dispositif qui délivre des grandeurs de réglage pour la conduite d'un véhicule automobile et qui présente
    une unité de commande (10) qui reçoit de détecteurs (14, 16, 18, 20) des grandeurs d'entrée qui représentent la situation du trafic et qui contiennent également des données de localisation (di, vri, pi) d'objets localisés et qui calcule à partir de ces grandeurs d'entrée les grandeurs de réglage et les délivre à des éléments de réglage (30, 32) qui conduisent le véhicule et
    un circuit de filtrage (22) qui sert à filtrer les données de localisation et dont le comportement temporel est défini par au moins un paramètre de filtrage,
    un module d'évaluation (38) prévu pour modifier le ou les paramètres de filtrage en fonction de la situation, le module d'évaluation (38) formant une seule grandeur d'évaluation (g) à partir d'un jeu de plusieurs grandeurs d'entrée et modifiant plusieurs paramètres de filtrage en fonction de cette grandeur d'évaluation,
    **caractérisé en ce que**
    la grandeur d'évaluation (g) constitue une mesure du niveau critique de la situation du trafic par rapport à l'objet concerné et
    **en ce qu'**un module de sélection (26) qui sélectionne à l'aide de la grandeur d'évaluation (g) un ou plusieurs objets localisés comme constituant un objet cible à suivre est prévu.

2.  Dispositif selon la revendication 1, **caractérisé en ce que** le module d'évaluation modifie les paramètres de filtrage dans le sens d'une diminution de la constante de temps s'il découle des données de localisation qu'il existe un risque de descendre en dessous d'une distance de sécurité par rapport à l'un des objets localisés.

3.  Dispositif selon les revendications 1 ou 2, **caractérisé en ce que** le module d'évaluation (38) modifie les paramètres de filtrage dans le sens d'une diminution des constantes de temps lorsqu'un nouvel objet est localisé.

4.  Dispositif selon l'une des revendications précédentes, **caractérisé en ce que** le module d'évaluation (38) modifie les paramètres de filtrage dans le sens d'une diminution des constantes de temps si le véhicule propre parcourt un virage.

5.  Dispositif selon l'une des revendications précédentes, **caractérisé en ce que** le module d'évaluation (38) modifie les paramètres de filtrage en fonction de la portée de localisation d'un détecteur (16) par lequel les objets sont localisés.

6.  Dispositif selon l'une des revendications précédentes, **caractérisé en ce que** le module d'évaluation (38) modifie les paramètres de filtrage en fonction de la distance mesurée (di) par rapport à un ou plusieurs objets localisés.

7.  Dispositif selon l'une des revendications précédentes, **caractérisé en ce que** le module d'évaluation (38) modifie les paramètres de filtrage en fonction de la vitesse (V) du véhicule propre.

8.  Dispositif selon l'une des revendications précédentes, **caractérisé en ce que** le module d'évaluation (38) modifie les paramètres de filtrage en fonction de la vitesse relative (vri) mesurée d'un ou plusieurs objets localisés.

9.  Dispositif selon l'une des revendications précédentes, **caractérisé en ce que** le module d'évaluation (38) modifie les paramètres de filtrage en fonction d'un intervalle de temps (T) réglé par le système de conduite du véhicule et à l'intérieur duquel le véhicule circulant devant est suivi.

10. Dispositif selon la revendication 8, **caractérisé en ce que** la dépendance de la grandeur d'évaluation (g) vis-à-vis des grandeurs d'entrée est conservée en mémoire sous la forme d'un champ (40) de caractéristiques.

*Fig. 1*

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4337872 A1
- DE 4422982 A1
- DE 10117722 A1
- US 5680313 A